# EUROPÄISCHE PATENTSCHRIFT

(11) **EP 0 739 003 B1**
(45) Veröffentlichungstag und Bekanntmachung des Hinweises auf die Patenterteilung: **06.11.2002**
(21) Anmeldenummer: 96105317.0
(22) Anmeldetag: 03.04.1996
(51) Int. Cl.: G11B 7/135, G11B 7/13, G11B 7/09, G11B 7/00

(54) **Kompatibles Aufzeichnungsgerät- und/oder Wiedergabegerät**
Compatible recording and/or reproduction apparatus
Appareil d'enregistrement et/ou lecture compatible

(30) Priorität: 22.04.1995 DE 19514881
(43) Veröffentlichungstag der Anmeldung: 23.10.1996
(73) Patentinhaber: DEUTSCHE THOMSON-BRANDT GMBH, 78048 Villingen-Schwenningen (DE)
(72) Erfinder: Richter, Hartmut, 78052 Villingen-Schwenningen (DE)

(56) Entgegenhaltungen:
- EP-A- 0 525 896
- EP-A- 0 646 909
- DE-A- 3 533 647
- JP-A- 5 234 107
- US-A- 5 113 378
- US-A- 5 281 797
- US-A- 5 289 443

## Beschreibung

Die Erfindung betrifft ein kompatibles Aufzeichnungs-und/oder Wiedergabegerät zur Informationswiedergabe von und/oder Aufzeichnung auf optische Informationsträger unterschiedlicher Speicherdichte.

Für Computer als auch für Geräte der Unterhaltungselektronik sowie im Multimediabereich werden zukünftig immer höhere Speicherkapazitäten und Datenraten notwendig werden.
Bei den optischen Speichern kann eine höhere Speicherkapazität durch Verkleinern der Informationsspeicherorte und des die Informationsschicht abtastenden Lichtfleckes erreicht werden. Zu diesem Zweck müßte z.B. Licht mit einer kürzeren Wellenlänge oder eine Objektivlinse mit einer höheren numerischen Apertur verwendet werden. Da Laserdioden mit beliebig kurzer Wellenlänge jedoch nicht verfügbar sind, können diese beiden Methoden auch kombiniert werden. Die Informationsspeicherorte auf dem Informationsträger, die bei der CD als Pits bezeichnet werden, können dann einerseits kürzer sein und zum anderen kann der Abstand zur benachbarten Spur verringert werden, ohne daß dadurch ein unerwünschtes Übersprechen auftritt. Weiterhin unterscheiden sich optische Informationsträger wie beispielsweise "Read only"-Systeme, wiederbeschreibbare Disksysteme, "Phase-Change"-Disks, "Magneto-Optische"-Disks oder auch noch zu erwartende optische Informationsträger durch die Art der Informationsspeicherung, die häufig auch unterschiedliche Speicherdichten ermöglichen.
Mit einem System zum Auslesen von Informationsträgern mit höherer Speicherkapazität ist es jedoch nicht ohne weiteres möglich, eine Platte mit geringerer Dichte, d.h. größeren Pits und größerem Spurabstand zu lesen oder mit Informationen zu beschreiben.
Einerseits sind die Daten repräsentierenden Pits oder Informationsspeicherorte im Verhältnis zum Abtastlichtfleck zu groß, so daß eine Intensitätsmodulation im reflektierten Licht nur an den Anfangs- und Endkanten der Pits auftritt und zum anderen wird aufgrund des unterschiedlichen Spurabstands bei Verwendung des sogenannten 3-Strahl-Spurnachführungverfahrens, das üblicher Weise zur Spurführung verwendet wird, eine geänderte Justage der zur Spurführung vorgesehenen Neben- bzw. Hilfsstrahlen notwendig.
Aus der EP 525 896 ist bereits ein kompatibles optisches Abtastgerät bekannt, bei dem die Informationen von unterschiedlichen Aufzeichnungsträgern mit dem Licht der gleichen Wellenlänge gelesen werden, indem der Leselichtfleck bei einem für eine kürzere Wellenlänge vorgesehenen Aufzeichnungsträger anstatt der Mittellinie der Informationsspur der Kante der Informationsspur folgt. Dies ist jedoch nur eingeschränkt bei bestimmten Verhältnissen zwischen Lichtfleckgröße, Spurbreite und Spurabstand möglich.
Darüber hinaus ist es bereits bekannt den Blendendurchmesser einer Lichtquelle kurzer Wellenlänge zu ändern, um die Wiedergabe oder Aufzeichnung von für eine kürzere Wellenlänge vorgesehenen Aufzeichnungsträgern zu ermöglichen, vgl. US 5,281,797.

Es ist deshalb Aufgabe der Erfindung, trotz Informationsträger unterschiedlicher Speicherdichte, ein Aufzeichnungs- und/oder Wiedergabegerät zu schaffen, das kompatibel bzw. für unterschiedliche optische Informationsträger trotz eines zwischen Informationsspeicherort- bzw. Pitgröße und Lichtfleckgröße einzuhaltenden Abhängigkeitsverhältnisses verwendbar ist, ohne daß die Wellenlänge des verwendeten Lasers oder die numerische Apertur der Objektivlinse verändert wird.

Diese Aufgabe wird mit im Hauptanspruch angegebenen Merkmalen gelöst. Vorteilhafte Weiterbildungen sind in den Unteransprüchen angegeben.

Insbesondere das Bestreben, die auf einen Informationsträger speicherbare Informationsmenge zu erhöhen, führt zu Informationsträgern höherer Speicherdichte beziehungsweise Speicherstrukturen geringerer Abmessungen. Wie bereits erwähnt, sind Mittel bekannt, die das Realisieren CD- und MOD- ähnlicher optischer Informationsträger höherer Speicherdichte sowie entsprechender Aufzeichnungs- und Wiedergabegeräte ermöglichen. Die Erfindung dient in diesem Zusammenhang insbesondere dazu, trotz einer zu vermutenden Inkompatibilität zu einem einzigen Aufzeichnungs-und/oder Wiedergabegerät eine Lösung anzugeben, die es ermöglicht, auch in Geräten für Informationsträger höherer Speicherkapazität bisher übliche Informationsträger zu betreiben. Es werden ein Verfahren und eine Anordnung angegeben, die es in nur einem Gerät ermöglichen, sowohl Informationsträger mit einer der gegenwärtigen Norm entsprechenden Speicherdichte als auch Informationsträger höherer Speicherdichte zu verwenden, ohne daß hierzu die Wellenlänge des verwendeten Lasers oder die numerische Apertur der Objektivlinse verändert werden müssen.
Es ist ein Aspekt der Erfindung mit nur einem optischen System bzw. dem gleichen optischen System die Spurführung nach dem 3-Strahl-Spurnachführungverfahren auch für optische Informationsträger mit unterschiedlicher Informationsspurbreite bzw. unterschiedlichem Spurabstand zu gewährleisten und es ist ein weiterer Aspekt der Erfindung trotz einer nicht durchgeführten Anpassung zwischen Lichtfleckgröße und Informationsspeicherort- bzw. Pitgröße eine Wiedergabe mit geringerer Speicherdichte gespeicherter Informationen zu ermöglichen.

Dies wird mit einem kompatiblen Aufzeichnungs- und/oder Wiedergabegerät erreicht, das derart hergestellt ist, daß ein an die höchste Speicherdichte hinsichtlich Wellenlänge und Lichtfleckgröße angepaßtes optische System verwendet wird, das im Strahlengang der Abtasteinheit zusätzlich zu dem zur Dreistrahlbildung aus einem Laserstrahl vorgesehenen Gitter mindestens zusätzliche Nebenstrahldetektoren und gegebenenfalls ein zweites oder weitere Gitter aufweist. Das zweite Gitter kann mit dem ersten Gitter auf einem Substrat vorgesehen sein, wobei die Gitterstrukturen zueinander einen Winkel aufweisen, um Nebenstrahlen für unterschiedliche Spurbreiten zur Verfügung zu stellen. Dieses zusätzliche oder auch weitere zusätzliche Gitter werden zum Erzeugen zusätzlicher Nebenstrahlen verwendet, die einen an die jeweilige Spurbreite angepaßten Abstand zueinander aufweisen. Dieses zusätzliche Gitter oder auch weitere Gitter werden ständig im Strahlengang belassen, so daß auf den Informationsträger stets mehrere Nebenstrahlen für Informationsträger unterschiedlichen Spurabstands bzw. unterschiedlicher Spurbreite gerichtet sind.
Durch Abgleich des zusätzlichen Gitters auf den größeren Spurabstand ist eine Spurnachführung in Verbindung mit zwei ebenfalls zusätzlichen Detektoren für zwei Systeme mit einem Abtaster erreicht. Als Spurführ- oder Spurfehlersignal werden dann die Signale der entsprechenden Detektoren ausgewertet.

Um trotz einer nicht durchgeführten Anpassung zwischen Lichtfleckgröße und Informationsspeicherort- bzw. Pitgröße eine Wiedergabe mit geringerer Speicherdichte gespeicherter Informationen zu ermöglichen, wobei die Informationen darstellenden Signale nachfolgend als Daten bezeichnet werden, wird ein mit höherer Dichte aufgezeichnetes Datensignal in bekannter Art und Weise mit einem Detektor detektiert. Zur Bereitstellung des mit geringerer Dichte aufgezeichnete Datensignals wird das Datensignal über ein den Anstieg des Signals auswertendes Mittel geführt, um ein der tatsächlichen Information auf dem Informationsträger geringerer Dichte entsprechendes Datensignal zu erzeugen. Bei der Abtastung des Informationsträgers geringerer Dichte mit einem vergleichsweise kleineren Spot ist das mit dem Detektor gewonnene Signal zunächst verfälscht, da beispielsweise das bisher zur Abtastung verwendete Prinzip der destruktiven Interferenz aufgrund der Fehlanpassung zwischen Spot- bzw. Lichtfleckgröße und Pitgröße nicht wirksam ist. Diese Verfälschung des detektierten Signals kann bei der CD in vorteilhafter Weise mit einem Flipflop korrigiert werden. Es wird ein Datensignal bereitgestellt, das dem Datensignal entspricht, welches beim Abspielen in einem Abspielgerät entstehen würde, das der Speicherdichte des Informationsträgers entspricht. Für ein Abtastgerät, das zur Spurführung das sogenannte Dreistrahlprinzip verwendet, ist im Strahlengang ein Mittel vorgesehen, mit dem zwei zusätzliche Strahlen auf der Disk abgebildet werden. Diese zusätzlichen Strahlen weisen dabei einen Abstand zueinander auf, der an die breiteren Spuren des Informationsträgers geringerer Informationsspeicherdichte angepaßt sind. Weiterhin sind diesen Strahlen Detektoren zugeordnet, mit denen in bekannter Weise ein entsprechendes Track-error-signal bzw. Spurfehlersignal gewonnen wird.
Dadurch wird erreicht, daß in einem Abspielgerät Informationsträger mit unterschiedlicher Informationsspeicherdichte abgespielt werden können.
Um auf den Strahlengang im Aufzeichnungs- und/oder Wiedergabegerät in der beabsichtigten Weise einzuwirken, werden weder ein Licht einer anderen Wellenlänge bereitstellender Laser noch eine Objektivlinse mit veränderter numerischer Apertur verwendet und dennoch können Informationsträger unterschiedlicher Speicherdichte und gegebenenfalls auch unterschiedlicher Speicherart mit nur einem optischen System in einem Gerät betrieben werden.
Es sind somit in vorteilhafter Weise kompatible Aufzeichnungs- und/oder Wiedergabegeräte herstellbar, die zum Betrieb mit Informationsträgern unterschiedlicher Speicherdichte und gegebenenfalls auch unterschiedlicher Speicherart geeignet sind.

Erwähnt sei auch ein Sonderfall, der vorliegt, wenn sich die Speicherdichten der Informationsträger um ganzzahlige Vielfache unterscheiden. In diesem speziellen Fall ist im Strahlengang des optischen Systems kein zusätzliches Gitter vorzusehen, da dann die bereits nur mit einem Gitter erzeugten Nebenstrahlen höherer Ordnung zur Spurführung verwendet werden können.

In vorteilhafter Weise können somit Geräte konzipiert werden, die beispielweise sowohl das Betreiben einer Video Disc mit hoher Speicherdichte als auch das betreiben einer Audio Disc mit geringer Speicherdichte in einem Gerät mit nur einem optischen System ermöglichen.

Die Anwendung der Erfindung ist jedoch nicht auf Informationsträger gleichen Speichertyps mit unterschiedlicher Informationsspeicherdichte eingeschränkt sondern ist auch für Informationsträger unterschiedlichen Speichertyps mit unterschiedlicher oder gleicher Informationsspeicherdichte möglich.

Nachfolgend wird die Erfindung anhand von Ausführungsbeispielen in Zeichnungen näher erläutert.
Es zeigen:
- Fig.1: Prinzipskizze zu Spuren und Spots für Informationsträger mit unterschiedlicher Speicherdichte,
- Fig.2: Prinzipskizze zur Detektoranordnung und Spurführsignalbildung,
- Fig.3: Prinzipskizze zur Datensignalabtastung für Informationsträger mit unterschiedlicher Speicherdichte,
- Fig.4: Prinzipskizze einer Anordnung zur Datensignalwiedergabe und Spurführung unterschiedlicher Informationsträger mit nur einer Abtasteinrichtung,
- Fig.5: Prinzipskizze zur Gitteranordnung,
- Fig.6: Prinzipskizze zur Datensignalgewinnung für Informationsträger mit unterschiedlicher Speicherdichte und

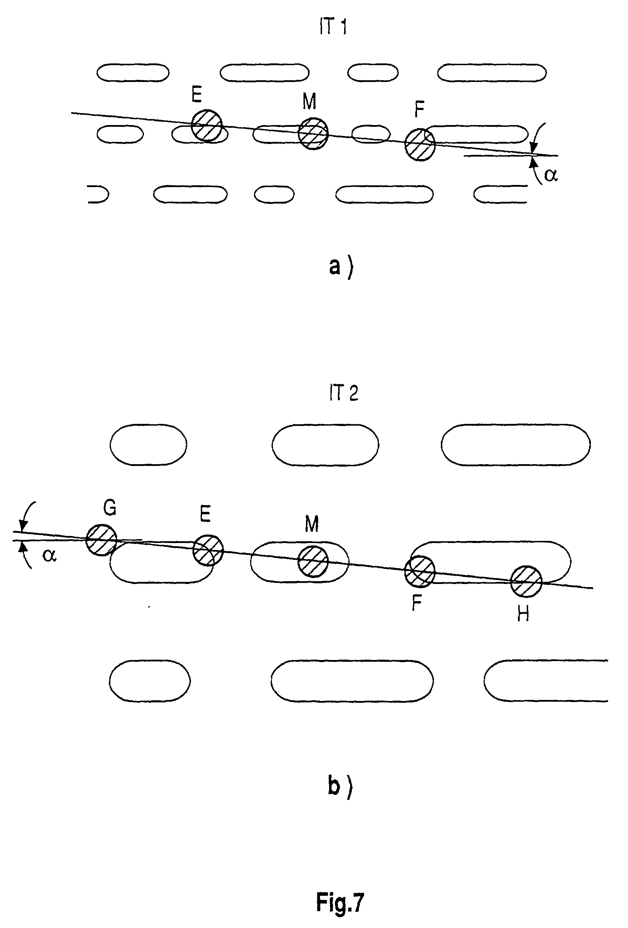

- Fig.7: Prinzipskizze zu Spuren und Spots für Informationsträger mit einer doppelten bzw. halben Speicherdichte.

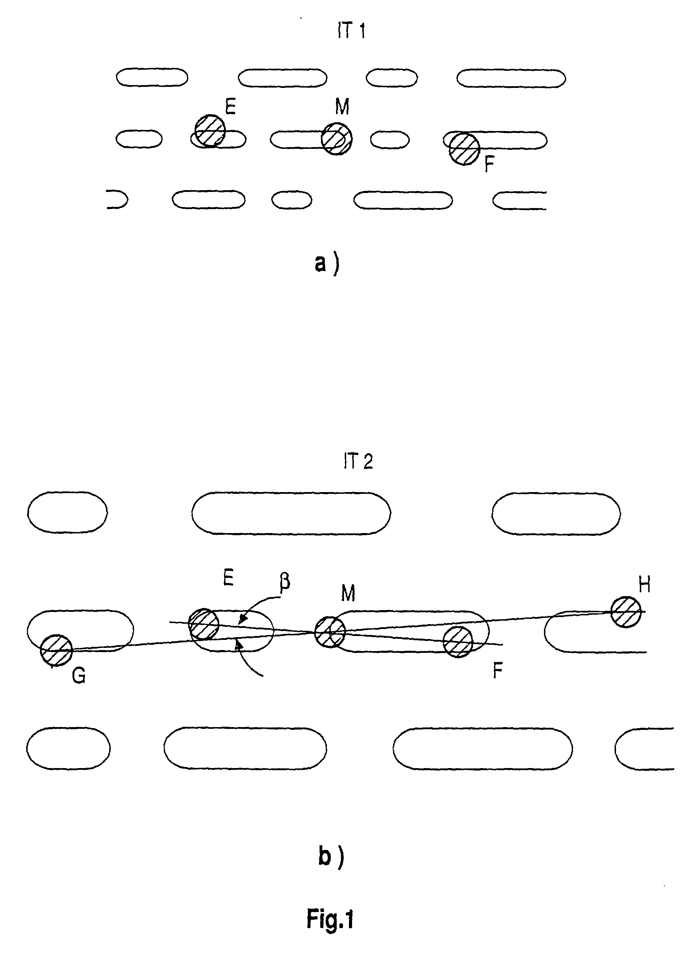

In der Prinzipskizze gemäß Fig.1 sind Spuren und Spots für Informationsträger IT1, IT2 mit unterschiedlicher Speicherdichte dargestellt, die trotz unterschiedlicher Speicherdichte bzw. Spurbreite der Informationsträger IT1 und IT2 eine Spurführung nach dem 3-Strahl-Spurnachführungverfahren mit nur einem optischen System ermöglichen. Im Vergleich zum zweiten Informationsträger IT2 gemäß Fig. 1b weist der in Fig. 1a dargestellte erste Informationsträger IT1 eine höhere Speicherdichte auf, die aus einer geringeren Pit- bzw. Speicherortgröße und einem geringeren Spurabstand resultiert. Der erste Informationsträger IT1 sei beispielsweise eine Video Disc und der zweite Aufzeichnungsträger IT2 sei beispielsweise eine Audio Disc. Informationen sind auf der Audio Disc bzw. CD oder Compact Disc in digitaler Form als Spiralspur aufeinanderfolgender Vertiefungen, den sogenannten Pits, aufgezeichnet. Der Spurabstand optischer Informationsträger gegenwärtiger CD Norm beträgt 1,6µm und die Pits weisen eine Breite von 0,6 µm sowie eine Tiefe von 0,12 µm auf und die Länge eines Pits oder der Abstand zwischen zwei Pits variiert im Bereich zwischen 0,9 und 3,3 µm, vgl. Philips tech. Rev.40, 1982, No.6, S.156. Diese Standardwerte sind auch für die Mini Disk zutreffend. Das höhere Speichervermögen der Mini Disk wird nicht durch eine höhere Speicherdichte des Informationsträgers sondern durch das Komprimieren der Informationen vor der Aufzeichnung erreicht. Zum optischen Abtasten und/oder Aufzeichnen von Pits geringerer Abmessungen und mit geringerem Spurabstand ist es notwendig, den Laserstrahl auf die Disk mit geringerer Lichtfleckgröße zu fokussieren. Dabei wird die Größe des Lichtfleckes sowohl von der numerischen Apertur der Objektivlinse als auch von der Wellenlänge des Laserlichtes bestimmt und so kann ein geringerer Lichtfleckdurchmesser bzw. eine geringere Lichtfleckgröße durch die Verwendung einer Lichtquelle geringerer Wellenlänge erreicht werden. Gegenwärtige verwendete Halbleiterlaser weisen eine Wellenlänge von 780 nm auf. Es sind jedoch bereits Halbleiterlaser bekannt, die Licht mit einer Wellenlänge von nur 30 nm bereitstellen. Ein quantitativer Sprung wird von optischen Frequenzverdopplern, sogenannten Second Harmonic Generator Crystals, erwartet. Sie ermöglichen eine Halbierung der eingestrahlten Wellenlänge. Der dabei auftretende Leistungsverlust kann durch eine höhere Laserleistung ausgeglichen werden. Vorteilhaft ist die Kombination von kürzerer Wellenlänge und erhöhter numerischer Apertur. Jedoch auch die numerische Apertur kann nicht beliebig erhöht werden, da dann das System hinsichtlich Verkippung der Disk kritisch wird und optische Abbildungsfehler hinzutreten. Um dennoch eine höhere numerische Apertur zum Erzeugen eines kleineren Lichtfleckdurchmessers verwenden zu können, wird die Substratdicke des Informationsträgers verringert, wie dies beispielsweise für eine zu erwartende Digitale Video Disc (DVD) oder Super Density Disc (SD) vorgesehen ist. Während bei der bekannten CD eine numerische Apertur von 0,45 verwendet wird, wird für die DVD dann eine numerische Apertur von 0,6 bei akzeptabler Empfindlichkeit des Systems auf Verkippung der Disk möglich.
Die Verwendung eines kleineren Lichtfleckes bzw. einer Lichtquelle geringere Wellenlänge zur Abtastung optischer Informationsträger würde jedoch dazu führen, daß mit derartigen Geräten Informationsträger gegenwärtiger CD-Norm nicht abspielbar sind. Grund dafür ist das zur Abtastung verwendete Prinzip der destruktiven Interferenz. Das Prinzip der destruktiven Interferenz besteht darin, daß eine optische Abtastung der Pits, die lediglich von Vertiefungen einer gleichmäßig reflektierenden Schicht gebildet werden, dadurch erreicht wird, daß der abtastende Lichtfleck derart fokussiert wird, daß der außerhalb eines Pits reflektierte Lichtanteil annähernd gleich dem von der Vertiefung reflektierten Lichtanteil ist und die Lichtanteile sich durch destruktive Interferenz auslöschen, so daß eine Abschwächung der Intensität als Abtastsignal ausgewertet werden kann.
Es besteht ein zwischen Pit- bzw. Speicherstrukturgröße und Lichtfleckgröße einzuhaltendes Abhängigkeitsverhältnis, das aus anderen Gründen auch bei optischen Informationsträgern vom Phase-Change-Typ oder anderen einzuhalten ist.
Dies ist teilweise auch für einen magneto-optischen Informationsträger, der sogenannten MOD, zutreffend, bei dem die Informationsspeicherung bzw. -wiedergabe im wesentlichen auf dem Drehen der Polarisationsrichtung des Lichtes beruht. Obwohl das Verhältnis zwischen der Größe magnetischer Domänen und der Lichtfleckgröße nicht mit der für Pits zutreffenden Genauigkeit eingehalten werden muß, ist auch hier bei Informationsträgern unterschiedlicher Speicherdichte, insbesondere hinsichtlich Informationsträger mit verringertem Spurabstand, ein gewisses Abhängigkeitsverhältnis zu berücksichtigen.

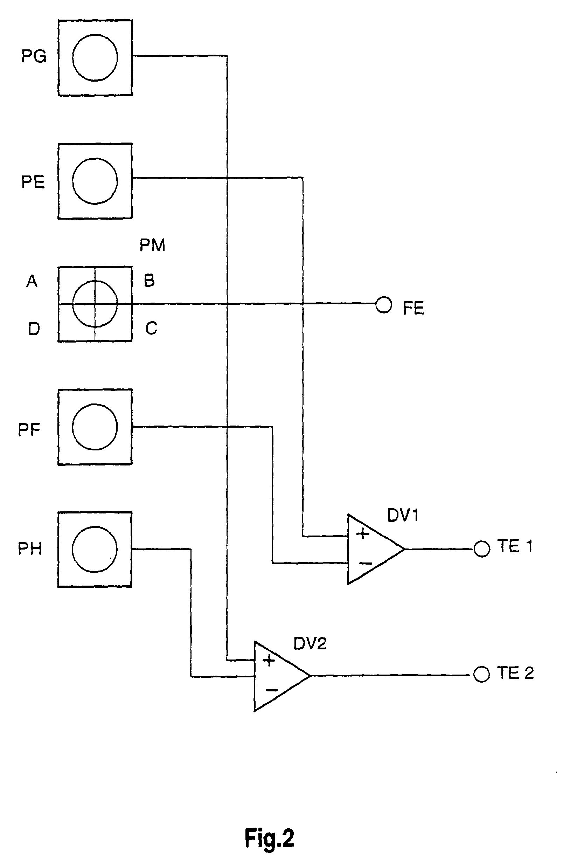

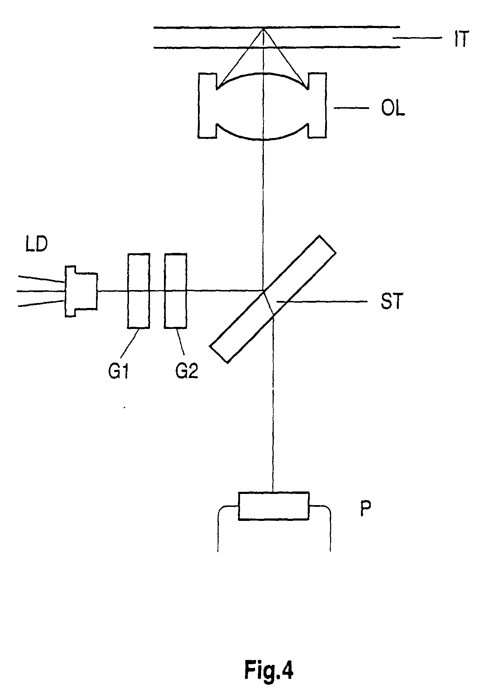

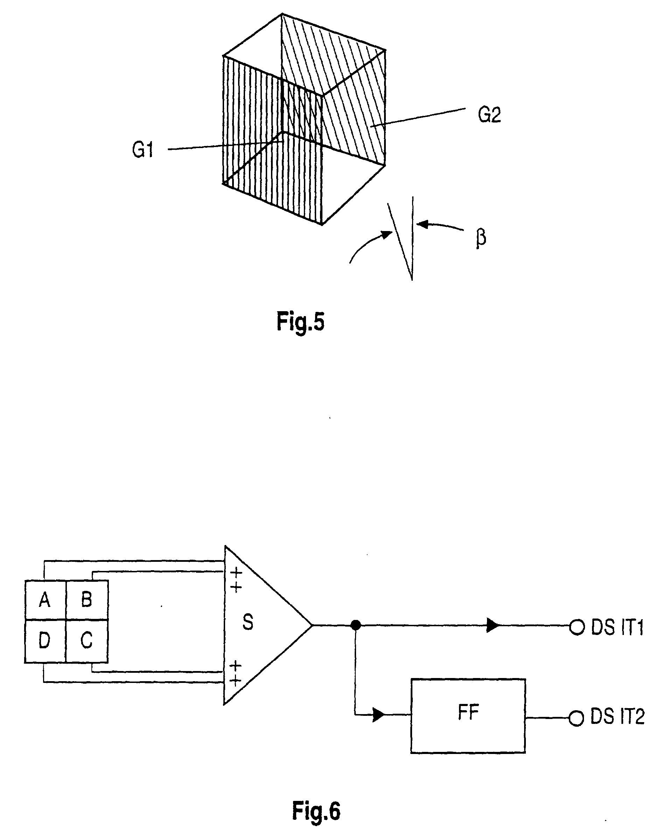

Zur Spurführung geeignete Nebenstrahlen E, F sind Fig. 1a entsprechend derart vorzusehen, daß die von den Nebenstrahlen E, F gebildeten Lichtflecke auf die Ränder der Pits zentriert sind, so daß ihr Mittelpunkt zu einer nicht dargestellten Mittellinie der Pits annähernd einem halben Abstand der Pitbreite aufweist. Die Nebenstrahlen E, F sind zum Hauptstrahl bzw. Hauptlichtfleck M vor- und nacheilend vorgesehen. Diese Anordnung resultiert aus einer Aufspaltung des Laserstrahls mit einem Gitter in den Hauptstrahl M und die Nebenstrahlen E und F. Die Anordnung von mit den Nebenstrahlen E, F gebildeter Lichtflecke mit ihrem Mittelpunkt auf dem Rand der Pits ist zum Bereitstellen eines Spurführ- bzw. Spurfehlersignals erforderlich. Das Ausrichten der von den Nebenstrahlen E und F gebildeten Lichtflecke mit dem Mittelpunkt auf dem Pitrand wird vorgenommen, um ein möglichst großes Detektionssignal zu erreichen. Bei einer derartigen Justage wird das vom Informationsträger reflektierte Licht durch die Pits maximal beeinflußt. Dies resultiert aus der Ausnutzung der bereits angesprochenen destruktiven Interferenzerscheinung, die ebenfalls zur Spurführung verwendet wird. Zum Erzeugen eines Spurführungsfehlersignals wird das Signal des dem Hauptlichtfleck M voranlaufenden Nebenstrahls mit dem des vom nacheilenden Nebenstrahl detektierten Signals verglichen. Hierzu werden in Fig. 2 nicht dargestellte Filter verwendet. Soll mit dem Dreistrahlsystem gemäß Fig. 1a, das für einen Informationsträger IT1 hoher Speicherdichte vorgesehen ist, ebenfalls ein Aufzeichnungsträger geringerer Speicherdichte gemäß Informationsträger IT2 und Fig. 1b gelesen werden, sind Nebenstrahlen G, H ebenfalls auf dem Rand der Pits zu positionieren. Diese Nebenstrahlen G, H weisen zu einer nicht dargestellten Mittellinie der Pits ebenfalls einen der halben Pitbreite entsprechenden Abstand auf. Dieser Abstand ist gegenüber dem in Fig. 1a dargestellten Abstand vergrößert. In Fig. 1b sind analog zu Fig. 1a ebenfalls die Nebenstrahlen E und F dargestellt. Da die Nebenstrahlen E und F in Fig. 1b mit ihren Mittelpunkten nicht auf dem Pitrand auftreffen, wird ein von ihnen ausgehendes Detektionssignal wesentlich geringer als das mit Nebenstrahlen G und H detektierte Signal sein. In Fig. 1 sind die Hilfsstrahlen E und F sowie G und H mit durch den Mittelpunkt des Hauptstrahles M verlaufende Hilfslinien eingetragen, die einen Winkel β einschließen. Die zur Spurführung im Zusammenhang mit Informationsträgern IT1, IT2 unterschiedlicher Speicherdichte erforderlichen Nebenstrahlen E, F, G, H werden mit einem in Fig. 4 dargestellten optischen System erzeugt. Das optische System gemäß Fig. 4 besteht aus einer den Laserstrahl bereitstellenden Laserdiode LD, zwei im Strahlengang zu einem Strahlteiler angeordneten Gittern G1, G2, dem Strahlteiler ST, einer Objektivlinse OL, dem Informationsträger IT und einem Detektor P. Der Detektor weist Fig. 2 entsprechend fünf Detektoren auf, wobei die Detektoren PE - PF, PH - PG zum Detektieren der Nebenstrahlen E bis H vorgesehen sind. Diese Detektoren schließen einen für den Hauptstrahl M vorgesehenen Detektor PM ein, der als Vier-Quadranten-Detektor ABCD ausgebildet ist. Mit diesem Mittendetektor werden sowohl das Informationssignal als auch ein Fokusfehlersignal FE bereitgestellt. Zum Bilden eines Spurfehlersignals TE1 bzw. TE2 sind die Detektoren PE, PF bzw. PG, PH jeweils mit einem Differenzverstärker DV1 bzw. DV2 verbunden. Dem jeweiligen Informationsträger IT1, IT2 entsprechend wird dann das vom jeweiligen Differenzverstärker DV1, DV2 bereitgestellte Spurfehlersignal TE1, TE2 verwendet. Zum Erzeugen der Nebenstrahlen E bis H sind zwei Gitter G1, G2 entsprechend Fig. 4 vorgesehen, deren Gitterlinien gemäß Fig. 5 einen Winkel β zueinander aufweisen. Die Gitter G1, G2 können Fig. 5 entsprechend auf einem Substrat angeordnet oder als Einzelgitter G1, G2 vorgesehen sein.

Erwähnt sei in diesem Zusammenhang, daß ein zweites Gitter G2 nicht erforderlich ist, wenn die Informationsträger IT1, IT2 hinsichtlich ihrer Speicherdichte bzw. der Pitbreite sich durch ein ganzzahliges Vielfaches unterscheiden, da bereits ein Gitter G1 zusätzlich zu den Nebenstrahlen E, F Nebenstrahlen höherer Ordnung erzeugt, die einem ganzzahligen Vielfachen entsprechen. Um in einem Abspielgerät derartige Informationsträger IT1, IT2 betreiben zu können, sind dann lediglich zusätzliche Photodetektoren PG, PH vorzusehen.

Neben diesen Ausführungen für zwei unterschiedliche Informationsträger IT1, IT2 ist das Prinzip auf mehrere unterschiedliche Informationsträger IT1...ITn mit einer entsprechenden Anzahl von Gittern und Detektoren entsprechend anzuwenden.

Neben dem Problem der Spurführung stellt die Informationsgewinnung bei Informationsträgern unterschiedlicher Speicherdichte ein weiteres Problem dar.

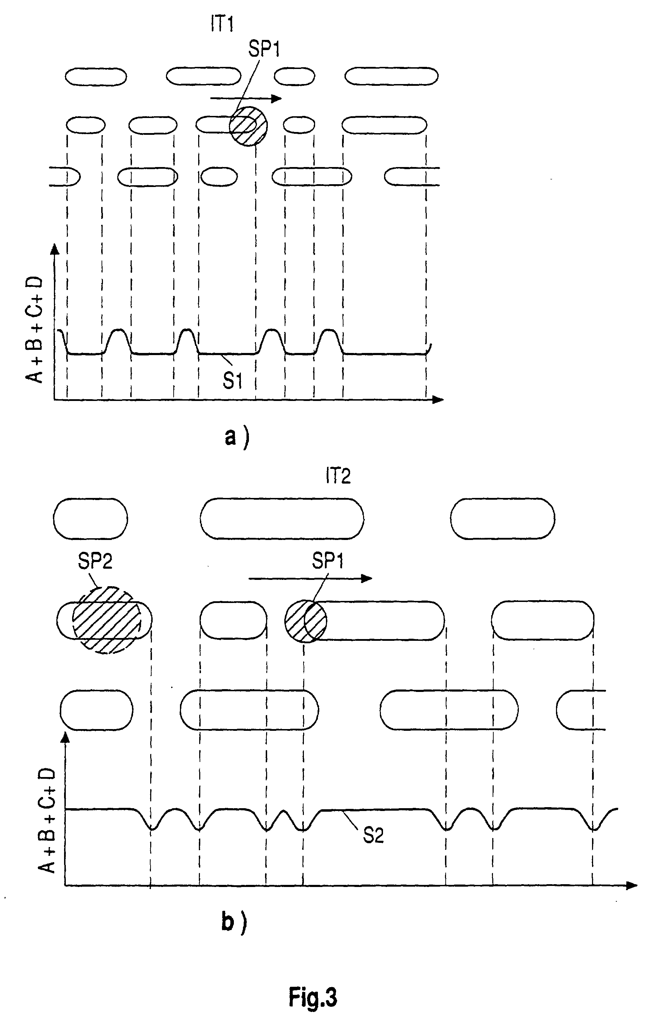

Fig. 3 veranschaulicht durch die Signalverläufe S1, S2, daß mit einem Spot SP1 bei unterschiedlicher Pitbreite unterschiedliche Signalverläufe S1, S2 als Informations- bzw. Datensignal detektiert werden. Die Signalverläufe S1, S2 stellen das Summensignal des Photodetektors PM, der aus den Sektoren ABCD besteht, dar. In Fig. 3b ist vergleichsweise ein Spot SP2 dargestellt, der eine Größe aufweist, wie sie in einem Gerät für Informationsträger IT2 verwendet werden würde. Um dennoch aus dem ursprünglich verfälschten Signalverlauf S2 das tatsächliche Informationssignal zu gewinnen, obwohl ein Lichtfleck geringerer Abmessung zur Abtastung verwendet wird, ist ein den Anstieg des Signalverlaufs S2 auswertendes Mittel vorgesehen. Dieses Mittel wird vorzugsweise von einem Flip-Flop gebildet. Fig. 6 zeigt eine entsprechende Schaltungsanordnung, bei der am Ausgang eines Summierverstärkers S, der das Summensignal der vier Quadranten A, B, C, D bereitstellt, das Datensignal des Informationsträgers DSIT1 direkt oder als DSIT2 über ein Flip-Flop FF gewonnen wird. Mit dem Flip-Flop FF werden eine ansteigende und nachfolgend abfallende Flanke des Signalverlaufs S2 detektiert. Da das Signal selbst eine Eight-to-Fourteen-Modulation aufweist, kann das Datensignal unmittelbar rekonstruiert werden. Grund dafür ist die Tatsache, daß es sich bei der Eight-to-Fourteen-Modulation um einen symmetrischen Code handelt. Das Vorzeichen des Signals ist somit ohne Bedeutung. Bei einer anderen Modulationsart wäre unmittelbar die Steigung der S-Kurve des Signalverlaufs S2 auszuwerten, um das ursprüngliche Datensignal exakt zu rekonstruieren.

## Patentansprüche

1. Kompatibles Aufzeichnungs- und/oder Wiedergabegerät für optische Informationsträger (IT1, IT2) unterschiedlicher Spurbreite mit Mitteln für Spurführung nach dem Dreistrahlverfahren, und einem optischen System, **gekennzeichnet, durch**
- einen Hauptstrahl (M), der zum Bereitstellen eines Informations-oder Daten signals eine an die kleinste Spurbreite angepaßte Wellenlänge und numerische Apertur aufweist,
- einen für den Hauptstrahl (M) , zum Bilden des Informations- oder Datensignals, angepaßten Detektor (PM),
- mehrere Nebenstrahlenpaare (E,F;G,H), die an die jeweilige Spurbreite der optischen Informationsträger (IT1, IT2) unterschiedlicher Spurbreiten angepaßt sind
- eine den unterschiedlichen Spurbreiten entsprechende Anzahl von Nebenstrahldetektorpaaren (PE,PF;PG,PH) zum Bereitstellen eines Spurfehlersignals entsprechend der Spurbreite des jeweiligen Informationsträgers (IT1, IT2),
- Mittel zur Bildung eines Summensignals des Detektors (PM) zur Rekonstruktion des Informations- oder Datensignals von einem Informationsträger (IT1), der die kleinste Sparbreite aufweißt und
- Zusätzlide Mittel zum Detektieren von Flanken im Summensignal des Detektors zur Rekonstruktion des Informations- oder Datensignals von einem Informationsträger (IT2), der eine breitere Spurbreite als die kleinste, an den Lichtfleckdurchmesser des Hauptstrahls (M) angepaßte Spurbreite aufweist.

2. Kompatibles Aufzeichnungs- und/oder Wiedergabegerät nach Anspruch 1, **dadurch gekennzeichnet, daß** das optische System zum Erzeugen an die Spurbreite unterschiedlicher Informationsträger (IT1, IT2) angepaßter Nebenstrahlenpaare (E-F;G-H) Gitter (G1, G2) aufweist, deren Gitterstrukturen der Spurbreite der Informationsträger (IT1, IT2) entsprechend zueinander um einen Winkel (β) gedreht sind.

3. Kompatibles Aufzeichnungs- und/oder Wiedergabegerät nach Anspruch 1, **dadurch gekennzeichnet, daß** das Mittel zum Detektieren von Veränderungen im Signal des Informationsträgers (IT2) ein Flip-Flop (FF) ist, das als Mittel zur Rekonstruktion des Informations- oder Datensignals eines Informationsträgers (IT2) verwendet wird, der eine breitere Spurbreite als die Spurbreite des Informationsträgers (IT1) aufweist, der die kleinste Spurbreite aufweist.

4. Kompatibles Aufzeichnungs- und/oder Wiedergabegerät nach Anspruch 1, **dadurch gekennzeichnet, daß** die Nebenstrahlen (E, F, G, H) auf den Rand von Pits einer entsprechenden Spur ausgerichtet sind.

5. Kompatibles Aufzeichnungs- und/oder Wiedergabegerät nach Anspruch 1, **dadurch gekennzeichnet, daß** die Nebenstrahlen (E, F, G, H) Strahlen höherer Ordnung sind, die den Spurbreiten angepaßt sind.

6. Kompatibles Aufzeichnungs- und/oder Wiedergabegerät nach Anspruch 1, **dadurch gekennzeichnet, daß** zur Rekonstruktion des Informations- oder Datensignals eines Informationsträgers (IT2) mit unsymmetrischer Codierung des Informations- oder Datensignals die Steigung der S-Kurve des Informations- oder Datensignals eines Informationsträgers, (IT2) verwendet wird, der eine breitere Spurbreite als die Spurbreite des Informationsträgers (IT1) aufweist, der die kleinste Spurbreite aufweist.

## Claims

1. Compatible recording and/or playback device for optical information carriers (IT1, IT2) having different track widths including means for track guidance according to the three-beam-method and including an optical system **characterized by**
- a main beam (M) exhibiting a wavelength and a numerical aperture matched to the smallest track width for providing an information- or data signal,
- a detector (PM) matched to the main beam (M) for forming said information- or data signal,
- a plurality of secondary beam pairs (E, F; G, H) matched to the respective track width of the optical information carriers (IT1, IT2) of different track widths
- a number of secondary beam detection pairs (PE, PF; PG, PH) corresponding to the different track widths for providing a track error signal corresponding to the track width of the respective information carrier (IT1, IT2),
- means for forming a summing signal of the detector (PM) for reconstruction of the information- or data signal from an information carrier (IT1) exhibiting the smallest track width, and
- auxiliary means for detecting edges within the summing signal of the detector for reconstruction of the information- or data signal from an information carrier (ITZ) exhibiting a track width being broader than the smallest track width matched to the light spot diameter of the main beam (M).

2. Compatible recording and/or playback device according to claim 1, **characterized in that** the optical system exhibits grids (G1, G2) for producing secondary beam pairs (E-F; G-H) matched to the track width of different information carriers (IT1, IT2), the grid structures being rotated to one-another by an angle (β) according to the track width of the information carriers (IT1, IT2).

3. Compatible recording and/or playback device according to claim 1, **characterized in that** the means for detecting variations within the signal of the information carriers (IT2) is a Flip-Flop being used a means for reconstructing the information- or data signal exhibiting a track width greater than the track width of the information carrier (IT1) exhibiting the smallest track width.

4. Compatible recording and/or playback device according to claim 1, **characterized in that** secondary beams (E, F, G, H) are aligned to the border of bits of a corresponding track.

5. Compatible recording and/or playback device according to claim 1, **characterized in that** the secondary tracks (E, F, G, H) are beams of higher order which are matched to the track widths.

6. Compatible recording and/or playback device according to claim 1, **characterized in that** for reconstructing the information- or data signal of an information carrier (IT2) with an automatic coding of the information- or data signal, the slope of the S-curve of the information- or data signal of an information carrier (IT2) is used which has a track width greater than the track width of the information carrier (IT1) exhibiting the smallest track width.

## Revendications

1. Appareil d'enregistrement et/ou lecture compatible pour véhicule d'information optique (IT1, IT2) de différentes largeurs de piste équipé de moyens d'alignement selon le processus à triple canon et un système optique **caractérisé par** :
- un rayon principal (M) présentant une longueur d'onde adaptée à la plus petite largeur de piste et une aperture numérique pour la mise à disposition d'un signal d'information ou de données
- un détecteur adapté au rayon principal (M) pour déclencher le signal d'information ou de données
- plusieurs paires de rayons secondaires (E,F ;G,H) adaptées à la largeur de piste des véhicules d'information optiques (IT1, IT2) de différentes largeurs de piste
- une des différentes largeurs de piste correspondant au nombre de paires de détecteurs de rayons secondaires (PE,PF ;PG,PH) pour la mise à disposition d'un signal de défaut d'alignement correspondant à la largeur de piste du véhicule d'information (IT1, IT2),
- moyens visant à construire un signal cumulé du détecteur (PM) pour la reconstruction du signal d'information ou de données d'un véhicule d'information (IT1) présentant la plus petite largeur de piste
- des moyens supplémentaires pour la détection de flancs dans le signal cumulé du détecteur pour la reconstruction du signal d'information ou de données d'un véhicule d'information (IT2)
- une largeur de piste plus large que la plus petite largeur de piste adaptée au diamètre dus spot lumineux du rayon principal (M)

2. Appareil d'enregistrement et/ou lecture compatible selon la demande 1 **caractérisé par le fait que** le système optique présente, pour la production, des grilles (G1, G2) à la largeur de piste de différents véhicules d'information (111,112) de paires de rayons secondaires adaptées (E,F; G,H) dont les structures sont tournées autour d'un angle (β) conformément à la largeur de piste des véhicules d'information (IT1, IT2)

3. Appareil d'enregistrement et/ou lecture compatible selon la demande 1 **caractérisé par le fait que** le moyen de détection de modifications dans le signal du véhicule d'information (IT2) est un flip-flop (FF) utilisé comme moyen de reconstruction du signal d'information ou de données d'un véhicule d'information (IT2) affichant une largeur de piste plus grande que celle du véhicule d'information (IT1) qui présente la largeur la plus petite.

4. Appareil d'enregistrement et/ou lecture compatible selon la demande 1 **caractérisé par le fait que** les rayons secondaires (E, F ,G ,H) sont alignés sur le bord d'une piste correspondante.

5. Appareil d'enregistrement et/ou lecture compatible selon la demande 1 **caractérisé par le fait que** les rayons secondaires (E, F ,G ,H) sont des rayons d'un ordre supérieur adaptés aux largeurs de piste.

6. Appareil d'enregistrement et/ou lecture compatible selon la demande 1 **caractérisé par le fait que** la montée de la courbe en S du signal d'information ou de données d'un véhicule d'information (IT2) pour la reconstruction du signal de données ou d'information d'un véhicule d'information est utilisé avec un codage asymétrique du signal de données ou d'information; le véhicule (IT2) présentant une largeur de piste plus grande que celle du véhicule d'information (IT1) qui affiche la plus petite largeur de piste.
